# EUROPÄISCHE PATENTSCHRIFT

(11) **EP 0 941 831 B1**
(45) Veröffentlichungstag und Bekanntmachung des Hinweises auf die Patenterteilung: **31.05.2006**
(21) Anmeldenummer: 99102838.2
(22) Anmeldetag: 01.03.1999
(51) Int. Cl.: B30B 1/26, B30B 15/14, F16C 3/28

(54) **Exzenterpresse mit geregelter Hauptwellenpositionierung**
Eccentric press with controlled positioning of the main shaft
Presse à excentrique avec positionnement contrôlé de l'arbre principal

(30) Priorität: 11.03.1998 DE 19810405
(43) Veröffentlichungstag der Anmeldung: 15.09.1999
(73) Patentinhaber: Schuler Pressen GmbH & Co. KG, 73033 Göppingen (DE)
(72) Erfinder: Kienle, Hans-Peter, 70327 Stuttgart (DE); Abt, Wilfried, 73098 Rechberghausen (DE); Bareis, Alfred, 73066 Uhingen (DE)
(74) Vertreter: Abel, Thomas Mario

(56) Entgegenhaltungen:
- EP-A- 0 248 917
- DE-A- 3 112 382
- DE-A- 3 408 662
- DE-A- 3 421 184
- US-A- 5 588 344

## Beschreibung

Die Erfindung betrifft eine Exzenterpresse mit geregelter Hauptwellenpositionierung.

Bei Exzenterpressen sind an dem Hauptantrieb häufig Einrichtungen angeschlossen oder anschließbar, die bedarfsweise spielfrei oder spielarm an die Exzenterwelle angekuppelt werden sellen. Bspw sind schnelllaufende Exzenterpressen mit Hubverstellung bekannt, bei denen der Exzenter eine Exzenterbüchse trägt, an der das Pleuel gelagert ist. Der Pressenhub wird durch Drehung der Exzencerbüchse gegen den Exzenter eingestellt. Während des normalen Betriebs ist die Exzenterbüchse an dem Exzenter arretiert. Dies muss möglichst mit einer drehfesten Arretierung erfolgen; Drehspiel ist nicht zulässig.

Die Verdrehung der Exzenterbüchse gegen den Exzenter erfolgt bspw. in einem Einstellvorgang, bei dem die Exzenterbüchsen drehfest gehalten und die Exzenterwelle in eine andere Stellung weitergedreht wird. Bspw. ist dazu aus der EP 0248917 B1 eine Exzenterpresse bekannt, bei der die Exzenterbüchsen mit druckölbetätigcen sogenannten Pressverbänden kraftschlüssig an den Exzentern festgeklemmt sind. Die Exzenterbüchsen stehen über ein Kulissengetriebe mit konzentrisch auf der Exzenterwelle sitzenden Winkelgeberscheiben in Getriebeverbindung. Jede Winkelgeberscheibe weist eine trapezförmige Radialausnehmung und eine von einem Sensor erfassbare Marke (Initiator) auf. Außerdem kann der Pressenhauptantrieb in einem Schleichgang betrieben werden, in dem die Hauptwelle nur langsam gedreht wird.

Zum Verstellen des Stößelhubs wird die Presse zunächst stillgesetzt und dann im Schleichgang in eine Stellung gedreht, in der die Ausnehmungen der Winkelgeberscheiben entsprechenden radialbeweglichen Bolzen gegenüberstehen. Die Bolzen werden nun radial nach innen verstellt, so dass sie in die trapezförmigen Ausnehmungen greifen. Durch die Wirkungen der die trapezförmige Ausnehmung begrenzenden Schrägflächen werden etwaige vorhandenen Positionierungenauigkeiten korrigiert, indem die Bolzen die Winkelgeberscheiben in die vorgesehene Lage drücken. Außerdem werden die Winkelgeberscheiben dadurch arretiert. Nun wird die Exzenterwelle durch Lösen der Pressverbände freigegeben und im Schleichgang in die neue gewünschte Position gefahren, wonach die Pressverbindung zwischen den Exzenterbüchsen und den Exzentern wieder hergestellt und die Bolzen radial nach außen verfahren werden, so dass die Winkelgeberscheiben wieder freigegeben sind. Zur Erfassung des Drehwinkelwegs dient eine weitere Winkelgeberscheibe mit einem zugeordneten Sensor.

Der erhaltene Verstellweg wird von der Auflösung der Winkelgeberscheibe zur absoluten Winkelerfassung bestimmt. Beim Anfahren der Anfangsposition wird jedoch nicht auf elektrische Signale zurückgegriffen, sondern die Feinpositionierung erfolgt durch die radial bewegbaren Bolzen. Dabei können erhebliche Kräfte auftreten, was eine entsprechend robuste Auslegung der Einstellvorrichtung bedingt.

Aus der DE-A-3421184 ist ein Verfahren zur Hubverstellung einer Exzenterpresse bekannt, bei dem zur Verstellung einer Exzenterbüchse der Pressenhauptantrieb genutzt wird. Dieser wird dann jeweils mit normaler Arbeitsdrehzahl ein- und ausgeschaltet. Um nach dem Ausschalten einen gewünschten Anhaltepunkt zu treffen, wird zuvor ein Bremswinkel errechnet. Nach einem ersten Versuch wird die Abweichung zwischen dem tatsächlichen Bremspunkt und dem gewünschten Bremspunkt bestimmt und ein neuer d.h. korrigierter Bremswinkel berechnet. Dieser Vorgang wird so lange fortgesetzt bis der richtige Bremswinkel gefunden ist.

Darüber hinaus ist aus der DE-U-81 27 545 eine Hubverstellung bekannt, die mittels eines Schleichgangantriebs arbeitet. Mit diesem werden festgelegte Bremspunkte angefahren. Stellen Näherungsschalter das Erreichen des Bremspunktes fest, schalten sie den Schleichgangantrieb ab, so dass die Exzenterwelle in der gewünschten Stellung stoppt.

Außerdem sind von der Exzenterwelle gelegentlich Nebenaggregate oder sonstige Einrichtungen angetrieben, die bspw. dem Teiletransport dienen. Sollen diese über formschlüssige Kupplungen an- und abgekuppelt werden, müssen spielarme Kupplungen verwendet werden. Jedes Spiel führt durch die Erschütterungen, denen die Presse während ihres Betriebs unterliegt, zu einem Schlagen von Teilen aneinander was zur Beschädigung und/oder zur Zerstörung derselben führen kann. Trotz Massenausgleich können die Bewegungen der Exzenterpresse, die häufig auf einem Fundament gefedert gelagert ist, erhebliche Amplituden erreichen. Nicht nur Kupplungen drehbeweglicher Teile, sondern auch Arretierungen außer Betrieb befindlicher und festgelegter Teile müssen deshalb spielfrei ausgebildet sein. Das wiederankuppeln solcher außer Betrieb befindlicher Teile an die Exzenterwelle erfordert deshalb eine hohe Präzision bei der Positionierung der zu kuppelnden Teile. Feinpositionierungen durch die Kupplung ist wegen der auftretenden Kräfte abzulehnen.

Davon ausgehend ist es Aufgabe der Erfindung, eine Exzenterpresse mit verbesserter Drehpositioniereinrichtung zu schaffen.

Diese Aufgabe wird mit einer Exzenterpresse gelöst, die die Merkmale des Patentanspruchs 1 aufweist.

Die erfindungsgemäße Exzenterpresse weist eine Drehpositioniereinrichtung auf, mit der es möglich wird, gewünschte Kupplungspositionen gezielt anzufahren. Im Gegensatz zum Stand der Technik (EP 0248917 B1), bei dem lediglich Auskuppelpositionen fest vorgegeben sind, das Einkuppeln der dort vorhandenen Exzenterbüchsen jedoch stufenlos erfolgen kann, wird es bei der erfindungsgemäßen Exzenterpresse möglich, feste Einkuppelpositionen sehr genau vorzugeben. Dies wiederum ermöglicht es, zur Kupplung zwischen den mit der Exzenterwelle zu verbindenden Einrichtungen und der Exzenterwelle formschlüssige Kupplungen vorzusehen. Während eine reibschlüssige Kupplung, wie sie aus dem Stand der Technik bei einer Exzenterpresse vorhanden ist, in eingekuppeltem Zustand von Natur aus spielfrei ist, haben formschlüssige Kupplungen bspw. Klauenkupplungen ein gewisses Spiel, um das Einrücken der Kupplungszähne in einem gewissen winkelbereich (Toleranzbereich) zu gestatten. Zahnschrägen können außerdem das Einkuppeln der Kupplungszähne unterstützen.

Stehen die Kupplungzähne der Kupplungshälften miteinander nicht genau auf Lücke, muss über die Schrägflanken (Einführschrägen) der Kupplungszähne eine minimale Verdrehung der Kupplungshälften bewirkt werden. Dies erfordert entsprechend robuste Kupplungen und relativ hohe Betätigungskräfte. Die Erfindung schafft hier Abhilfe, indem die vorgegebenen Kupplungspositionen durch die Steuer Regeleinrichtung gezielt und präzise angefahren werden können. Die Steuer Regeleinrichtung fährt dazu die gewünschte Kupplungsposition mittels des Hauptantriebs an. Ein Verstellen oder Verdrehen der Exzenterwelle oder der anderen Kupplungshälfte beim Einrücken der Kupplung ist nicht erforderlich. Vielmehr wird die Kupplungsposition so genau angefahren, dass die Kupplung auch dann ohne weiteres eingerückt werden kann, wenn sie kein ohne nahezu kein Spiel aufweist.

Durch die Vermeidung von Spiel in der formschlüssigen Kupplung wird ein Verschleiß an dieser Stelle vermieden. Außerdem wird es möglich, die Kupplung nur hinsichtlich des im Betrieb zu übertragenden Drehmonents zu dimensionieren, wobei keine Zuschläge für irgendwelche Belastungen beim Einkuppeln erforderlich sind.

Das erfindungsgemäße Konzept einer oder mehrere Kupplungspositionen mittels einer Regeleinrichtung gezielt anzufahren, die sowohl den Hauptantrieb als auch eine Erfassungseinrichtung zur Erfassung der Drehposition umfasst, stellt einen erheblichen Komfortgewinn dar. Die Drehpositioniereinrichtung stellt die Kupplungspositionen geregelt ein, wobei das bisher erforderliche manuelle Einstellen der Kupplungspositionen durch "Spielen" mit Kupplung und Bremse unterbleiben kann. Außerdem werden veränderliche Faktoren und Unwägbarkeiten durch die Regelschleife ausgeregelt. Bspw. können im Antriebsstrang vorhandener Schlupf, vorhandenes Spiel und veränderliche Reibungswiderstände sowie wechselnde Drücke in dem pneumatischen Stößelgewichtsausgleich von ihren Einflüssen her unwirksam gemacht, d.h. ausgeschaltet werden.

Die Erfassungseinrichtung ist vorzugsweise ein Minkelschrittgeber, der als inkrementaler Geber mit hoher Auflösung die Absolutpositionen der Exzenterwelle ausgibt. Bedarfsweise kann jedoch ein Geber verwendet werden, der ausgehend von einem Nullsignal (Bezugssignal) Schrittsignale ausgibt, die von der Steuereinrichtung zu zählen sind.

Der Hauptantrieb ist vorzugsweise ein Elektromotor, der auch bei einer ganz geringen Drehzahl oder bei der Drehzahl Null ein hohes Drehmoment bspw. das Nenndrehmoment abgeben kann. Der Motor kann bspw. ein fremdbelüfteter Drehstrom Asynchronmotor sein, der mit einer entsprechenden elektronischen Ansteuerung versehen ist.

Die erfindungsgemäße Exzenterpresse gestattet Positioniergenauigkeiten von besser als 0,02 Grad an der Exzenterwelle. Damit kann sowohl die Kupplung zum Ankuppeln der zeitweilig zu betätigenden Einrichtung als auch eine etwaige Arretiereinrichtung, mit der die Einrichtung gegenüber der Exzenterwelle drehfest festlegbar ist, spielarm bzw. spielfrei gestaltet werden. Die Positionierung kann auch deshalb so genau ausgeführt werden, weil der Hauptantrieb nicht nur den Antrieb der Exzenterwelle bis zu der gewünschten Kupplungsposition sondern auch das Abbremsen der Exzenterwelle und des mit dieser verbundenen Schwungrads erbringt. Der Hauptantrieb (Elektromotor) und die zugeordnete Steuereinrichtung (Regeleinrichtung) sind dabei so ausgelegt, dass der Motor nicht nur ein positives sondern auch ein negatives Drehmoment erzeugen kann und somit als Bremse und als Führungsmittel zum genauen Einstellen der gewünschten Kupplungsposition wirkt. Die Exzenterwelle kann sogar wenigstens etwas rückwärts gedreht werden.

Die wenigstens zeitweilig mit der Exzenterwelle zu kuppelnde Einrichtung kann bspw. eine Exzenterbüchse sein, die als Eubverstelleinrichtung auf dem Exzenter sitzt. Soll die Exzenterbüchse gegen den Exzenter verdreht werden, wird zunächst eine Entkupplungsposition angefahren, in der die Exzenterbüchse bspw. mittels eines Bolzens spielarm oder spielfrei an einem ortsfesten Träger gesichert wird. Die Exzenterbüchse ist mittels einer formschlüssigen Klauenkupplung mit der Exzenterwelle verbunden. Diese wird nun ausgerückt, wonach die Exzenterwelle in die neue Kupplungsposition gefahren und die Klauenkupplung wieder eingekuppelt werden. Fehlendes Spiel sowohl in der Arretiereinrichtung (Bolzen) als auch in der Klauenkupplung stellen einen Betrieb der Exzenterpresse ohne Spiel zwischen der Exzenterbüchse und dem Exzenter sicher.

Eine andere Einrichtung, die mit der Exzenterwelle bedarfsweise zu verbinden sein kann, kann bspw. eine Teiletransportvorrichtung, insbesondere eine Entnahmeschaufel sein. Wird diese nicht benötigt, wird sie in einer Ruhestellung arretiert und von der Exzenterwelle getrennt. Zur Arretierung dient eine spielfreie Arretiervorrichtung, bspw. ein Bolzen, während zur Kupplung mit der Exzenterwelle eine formschlüssige Kupplung dienen kann. Jedes Spiel in der Arretiervorrichtung kann zu Beschädigungen und auf Dauer zur Zerstörung wesentlicher Teile führen. Gleiches gilt für die formschlüssige Kupplung zur Verbindung zwischen der Entnahmeschaufel und der Exzenterwelle. Die erfindungsgemäße Exzenterpresse vermeidet ein äerartiges Spiel und gestattet das problemlose An- und Abkuppeln der Entnahmeschaufel an die bzw. von der Exzenterwelle durch die hochgenaue Positionierung der Exzentwelle von besser als 0,02 Grad.

Weitere Einzelheiten vorteilhafter Ausführungsformen der Erfindung sind Gegenstand von Unteransprüchen und ergeben sich aus der Zeichnung oder der zugehörigen Beschreibung.

In der Zeichnung ist ein Ausführungsbeispiel der Erfindung veranschaulicht. Es zeigen:
Fig. 1 eine Exzenterpresse mit einer Drehpositioniereinrichtung in schematisierter Darstellung, in einer Seitenansicht,
Fig. 2 die Exzenterpresse nach Figur 1, in einer Stirnansicht mit Darstellung ihrer Antriebseinrichtung,
Fig. 3 eine Kupplungs- und Arretiereinrichtung der Exzenterpresse nach Figur 1, in einer schematisierten Schnittdarstellung und in einem anderen Maßstab,
Fig. 4 die Exzenterpresse nach Figur 1, in einer ausschnittsweisen Darstellung eines Exzenters mit Hubverstelleinrichtung, in schematisierter Darstellung und in einem anderen Maßstab, und
Fig. 5 die Steuer- und Regeleinrichtung der Exzenterpresse 1 nach Figur 1, zur Einstellung gewünschter und vorgegebener Dreh- bzw. Kupplungspositionen als Blockschaltbild.

### Beschreibung:

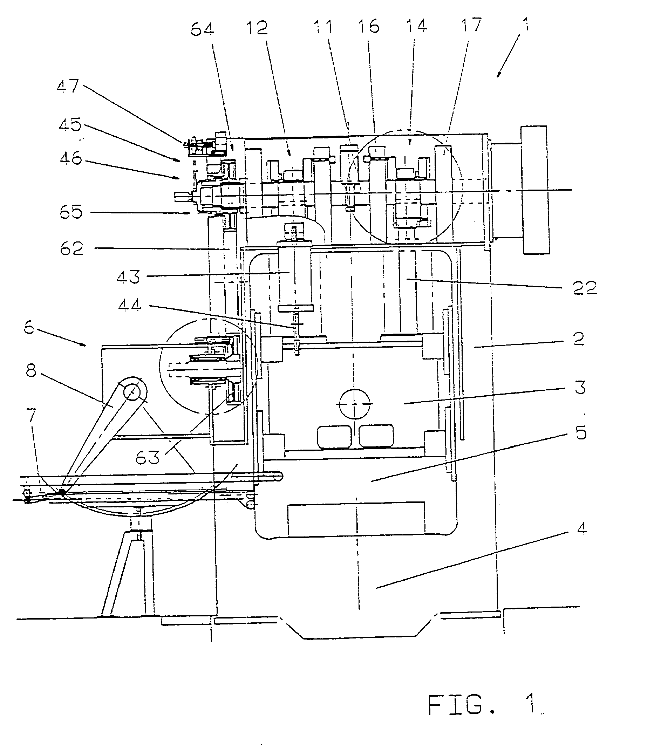

In Figur 1 ist eine Exzenterpresse 1 veranschaulicht, die einen in einem Pressengestell 2 vertikal auf und ab bewegbar gelagerten Stößel 3 aufweist. Unterhalb des Stößels 3 und oberhalb eines Pressentischs 4 ist ein Werkzeugaufnahmeraum 5 ausgebildet, der bei Betrieb der Exzenterpresse 1 von Werkstücken durchlaufen wird. Zur Entnahme der Werkstücke aus der Exzenterpresse 1 dient eine Entnahmevorrichtung 6, die eine sogenannte Entnahmeschaufel 7 beinhaltet. Diese ist von einem hin- und hergehend antreibbaren Schwenkarm 8 bewegt.

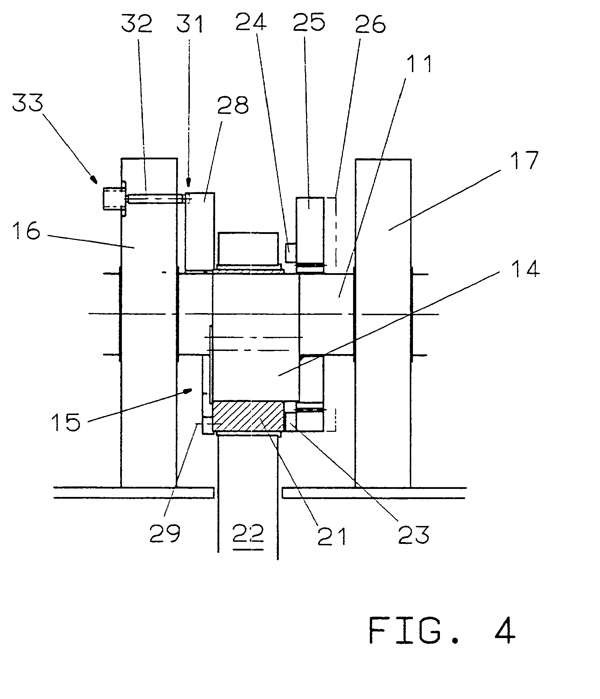

Zum Antrieb des Stößels 3 dient eine Exzenterwelle 11, die in dem Pressengestell 2 drehbar gelagert ist. Auf der Exzenterwelle 11 sitzen wenigstens zwei Exzenter 12, 14, von denen der Exzenter 14 mit einer von diesem getragenen Hubverstelleinrichtung 15 exemplarisch in Figur 4 veranschaulicht ist. Die Exzenter 12, 14 sind untereinander soweit gleich ausgebildet, dass die Beschreibung des Exzenters 14 zugleich für den Exzenter 12 gilt.

Die Exzenterwelle 11 ist zu beiden Seiten des Exzenters 14 in entsprechenden, mit dem Grundgestell 2 verbundenen Lagerböcken 16, 17 drehbar gelagert. Auf dem drehfest mit der Exzenterwelle 11 verbundenen Exzenter 14 sitzt eine Exzenterbüchse 21, die zur Hubverstellung dient. Die Exzenterbüchse 21 trägt an ihrer Außenseite über eine geeignete Lagereinrichtung ein Pleuel 22, bzw. dessen Pleuelfuss. Das Pleuel 22 ist, wie auch aus Figur 1 hervorgeht, mit seinem anderen Ende mit dem Stößel 3 verbunden und erteilt diesem entsprechend der Drehzahl der Exzenterwelle 11 die Auf- und Abbewegung.

In Betrieb ist die Exzenterbüchse 21 drehfest mit dem Exzenter 14 verbunden. Dazu dient eine an der Exzenterbüchse 21 vorgesehene Planverzahnung oder Hirth-Verzahnung 23, die mit einer entsprechenden Verzahnung 24 eines axial auf der Exzenterwelle 11 verschiebbar gelagerten Rings 23 in und außer Eingriff bringbar ist. Der Ring 25 ist auf der Exzenterwelle 11 drehfest gesichert und in seiner Axialposition durch eine nicht weiter veranschaulichte Betätigungseinrichtung verstellbar. Seine Entkuppelstellung ist in Figur 4 durch eine strichpunktierte Linie 26 veranschaulicht, während er in dick ausgezogenen Linien in seiner Kuppelstellung veranschaulicht ist, in der er mit der Verzahnung 23 der Exzenterbüchse 21 in Eingriff steht. Die Verzahnungen 23, 24 sind spielfrei ausgebildet, so dass die Exzenterbüchse 21 ohne Spiel drehfest auf dem Exzenter 14 sitzt.

Die Exzenterbüchse 21 ist an ihrer der Verzahnung 23 gegenüberliegenden Stirnseite mit einem Kupplungs- oder Arretierungsring 28 verbunden, der koaxial oder konzentrisch auf der Exzenterwelle 11 sitzt und zusätzlich dem Massenausgleich dient. Zur Verbindung dient ein strichpunktiert angedeuteter Bolzen 29. Der Arretierungsring 28 weist an einer radial außen liegenden Stelle eine Radialnut 31 auf, der ein in dem Lagerbock 16 axial verschiebbar gelagerter Sperrbolzen 32 zugeordnet ist. Der Sperrbolzen 32 ist mit einer lediglich schematisch angedeuteten Betätigungseinrichtung 33 derart axial verstellbar, dass er bedarfsweise in die Radialnut 31 eingefahren und aus dieser herausgezogen werden kann. Die Radialnut 31 und der Sperrbolzen 32 sind dabei derart bemessen, dass der Sperrbolzen 32 spielfrei in die Bohrung 31 fasst.

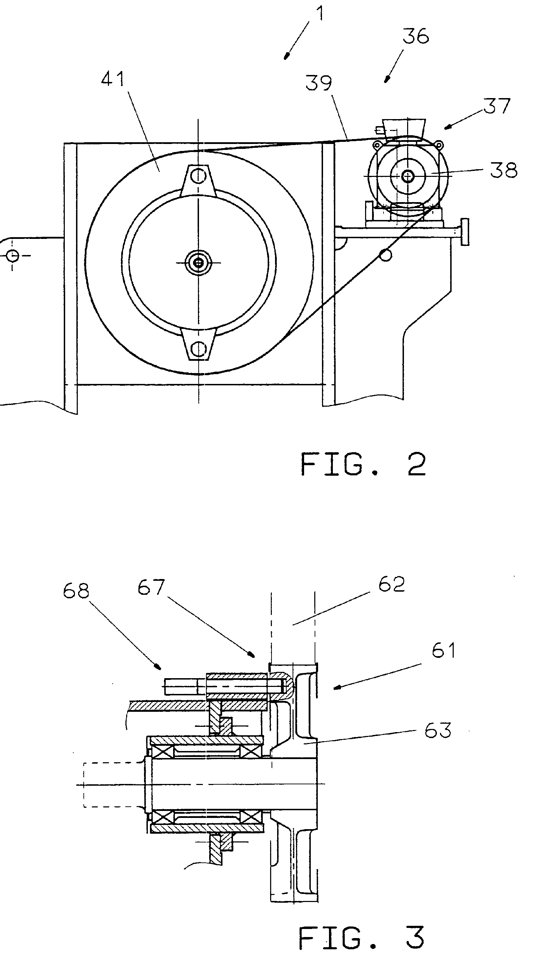

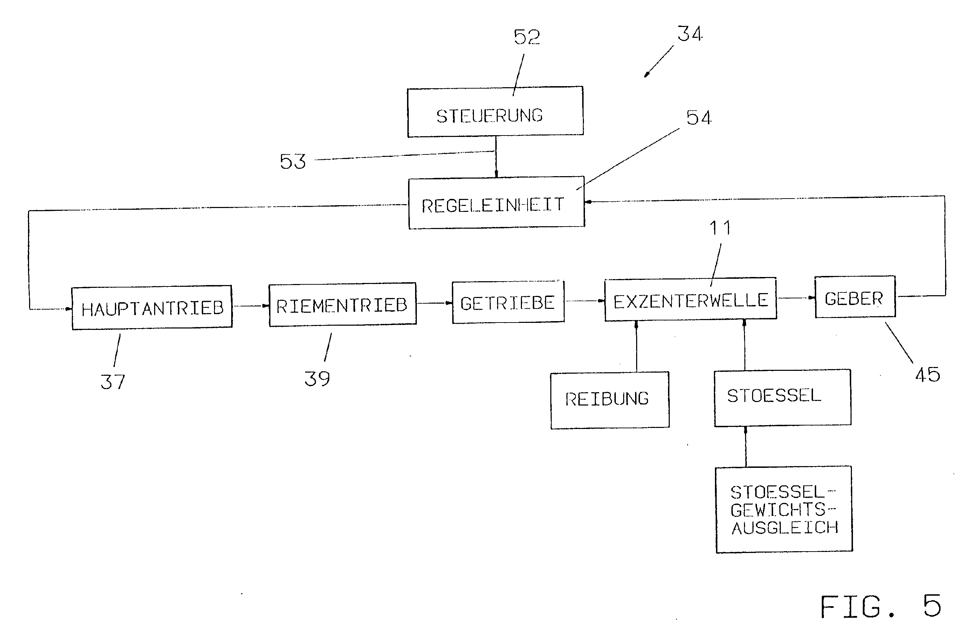

Um den Kupplungsring 25 in verschiedenen Kupplungsstellungen ohne Versgerrung oder Verklemmung der Kupplungszähne 23, 24 ein- und ausrücken zu können und um bedarfsweise den Sperrbolzen 32 in die Radialnut 31 einschieben zu können, ist an der Exzenterpresse 1 eine Drehpositioniereinrichtung 34 ausgebildet, die schematisch in Figur 5 veranschauliche ist und zu der auch ein aus Figur 2 ersichtlicher Hauptantrieb 36 gehören.

Der Hauptantrieb 36 beinhaltet einen fremdbelüfteten Drehstromasynchronmotor 37. Von seinem Abtrieb ist eine Riemenscheibe 38 angetrieben, die über einen Riementrieb mit einem Riemen 39 eine mit der Exzenterwelle 11 drehfest oder über ein Getriebe verbundene größere Riemenscheibe 41 antreibt. Die Riemenscheibe 41' stellt zugleich eine Schwungmasse dar oder ist mit dieser verbunden. Auf dem Weg zwischen dem Motor 37 und der Exzenterwelle kann eine Kupplung und/oder eine Bremse angeordnet sein, was nicht weiter veranschaulicht ist .

Es ergibt sich damit die in Figur 5 veranschaulichte Grundstruktur der Drehpositioniereinrichtung 34. Der Hauptantrieb 37 arbeitet über einen Riementrieb und ein Getriebe auf die Exzenterwelle 11. Während durch den Riementrieb in dem System zwangsläufig Schlupf vorhanden ist und Reibung auftritt, unterliegt die Exzenterwelle wechselnder Reibung an ihren Lagerstellen und an dem Stößel , dessen Geschwindigkeit drehwinkelabhängig ist. Außerdem wirkt auf den Stößel ein Stößelgewichtsausgleich, der durch ein oder mehrere in Figur 1 veranschaulichte Pneumatikzylinder 43 gebildet ist. Die Pneumatikzylinder 43 sind an dem Pressengestell 2 gelagert, während ihre Kolbenstange 44 mit dem Stößel 3 verbunden ist. Schwankt der Druck in dem Pneumatikzylinder etwas, ändert sich das in jedem Winkelschritt der Exzenterwelle 11 bei einer gegebenen Exzenterwellendrehzahl auf die Exzenterwelle wirkende Drehmoment.

Zur Erfassung der exakten Drehposition der Exzenter welle 11 dient ein auch in Figur 1 veranschaulichter Geber 45, der bspw. einen über einen Zahnriemen 46 von der Exzenterwelle 11 her mitgedrehten inkrementalen Geber 47 beinhaltet. Dieser gibt Pcsitionssignale ab, die bspw. als Digitalsignale vorliegen und die Drehposition der Exzenterwelle 11 mit hoher. Auflösung kennzeichnen. Abweichende Bauformen sind möglich.

Das von dem Geber 45 abgegebenen Signal gelangt invertiert zu einer Regeleinheit 54, die von einer Steuereinrichtung 52 (Pressensteuerung) einen Vorgabewert für die Position der Hauptwelle 11 erhält, wenn ein entsprechender Stellvorgang auslöst werden soll. Die Steuereinrichtung 52 gibt außerdem über einen entsprechenden Signalpfad 53 ein Signal an die Regeleinheit 54, um diese zu aktivieren wenn der Drehpositionier- oder Stellvorgang der Exzenterwelle 11 durchgeführt werden soll. Die Regeleinheit 54 ist ein PI-Regler, der den Elektromotor des Hauptantriebs 37 führt bzw. ansteuert.

Die insoweit beschriebene Exzenterpresse 1 arbeitet hinsichtlich der Hubverstellung wie folgt:

Im Ausgangszustand ist die Exzenterpresse 1 zunächst stillgesetzt und die Exzenterwelle 11 dreht nicht. Die Steuereinrichtung 52 gibt nun die Position vor (Leitung 53), in die sich die Exzenterwelle 11 drehen soll und in der der Arretierungsbolzen 32 in die Radialnut 31 einschiebbar ist. Über den Signalpfad 53 aktiviert die Steuereinrichtung 52 die Regeleinheit 54, die dann die Abweichung zwischen der von dem Geber 45 erfassten Drehposition der Exzenterwelle und der von der Steuereinrichtung 52 vorgegebenen Sollposition der Exzenterwelle bestimmt. Entsprechend wird der Hauptantrieb 37 gesteuert, so dass dieser die gewünschte Kupplungsposition gezielt anfährt und dort stoppt.

Ist die Sollposition erreicht, wird die Exzenterbüchse 21 drehfest gesichert, indem der Arretierungsbolzen 32 in die Radialnut 31 eingefahren wird. Dazu dient die Betätigungseinrichtung 33.

Ist die Exzenterbüchse 21 drehfest verriegelt, öffnet die Steuereinrichtung 52 die Klauenkupplung, die die Exzenterbüchse 21 drehfest mit der Exzenterwelle 11 verriegelt hatte. Dazu wird der Ring 25 axial verschoben, so dass die Kupplungszähne 24 die Kupplungszähne 23 freigeben.

Nach Freigabe der Exzenterbüchse 21 gibt die Steuereinrichtung 52 einen neuen Positionswert vor, in dem die Klauenkupplung wieder einzurücken ist. Die Regeleinrichtung 54 erkennt die Abweichung zwischen der Ist-Position und der Soll-Position und steuert den Hauptantrieb 37 auf die neue Position. In dieser wird der Ring 25 von der Steuereinrichtung 52 über eine nicht dargestellte Betätigungseinrichtung wieder so verschoben, dass die Klauenkupplungszähne 24 in die Kupplungszähne 23 eingreifen und die Exzenterbüchse 21 wieder drehfest mit der Exzenterwelle 11 verbunden ist. Während dieses Vorgangs hält der Hauptantrieb 37 die Exzenterwelle 11 in der vorgegebenen Drehposition, ohne den Arretierungsbolzen 32 zu belasten oder gar zu verklemmen. Nach erfolgtem Einkuppeln der Klauenkupplung wird dieser von der Betätigungseinrichtung 33 gesteuert von der Steuereinrichtung 52 aus der Radialnut 31 herausgezogen. Die Hubverstellung ist somit vorgenommen.

Eine ähnliche Vorgehensweise findet sich bspw. beim An- und Abkuppeln der Teiletransporteinrichtung 6. Deren Kupplungseinrichtung 61 ist in Figur 3 gesondert veranschaulicht. Ein von der Exzenterwelle 11 angetriebener Zahnriemen 62 läuft über eine Zahnriemenscheibe 63, die die Entnahmevorrichtung 6 antreibt. Der Zahnriemen 62 ist von einer Zahnriemenscheibe 64 angetrieben, die bspw. über eine Klauenkupplungseinrichtung 65 mit der Exzenterwelle 11 drehfest verbindbar ist. Zur Festlegung der Teiletransportvorrichtung 6 in einer Ruheposition kann die Riemenscheibe 63 in einer vorgegebenen Drehposition arretiert werden. Dazu ist sie radial außen mit einer Axialbohrung 67 versehen, in die ein axial bewegbarer Stift 68 einrasten kann. Die Betätiguna des Stifts 68 und der Klauenkupplungsvorrichtung 65 entspricht dem Zusammenspiel bei der vorbeschriebenen Hubverstellung. Weder die Klauenkupplungseinrichtung 65 noch der Stift 68 und die Axialbohrung 67 weisen ein erwähnenswertes Spiel auf. Dadurch sind sowohl die Klauenkupplungseinrichtung als auch die Arretierung vibrations- und/oder stoßfest.

Bei einer Exzenterpresse ist zum Anfahren von vorbestimmten Kupplungspositionen zum An- und Abkuppeln von der Exzenterwelle 11 angetriebenen Teilen eine Drehpositioniereinrichtung 34 vorgesehen, die den Pressenhauptantrieb 37 und einen Winkelgeber 45 unter der Regie einer Regeleinrichtung 54 zum gezielten Anfahren vorgegebener Kupplungspositionen nutzt. Dadurch kann eine derart hohe Positioniergenauigkeit erreicht werden, dass die beteiligte Kupplungen und Arretierungen nahezu spielfrei ausgelegt werden könnten.

## Patentansprüche

1. Exzenterpresse (1)
mit einem Hauptantrieb (37), der einen Elektromotor aufweist und wenigstens zeitweilig mit einer Exzenterwelle (11) in Antriebsverbindung befindlich ist,
mit einer wenigstens eine Kupplungsposition festlegenden, mit der Exzenterwelle (11) im Antriebssinne verbindbaren und bedarfsweise von dieser trennbaren Einrichtung (21),
mit einer Erfassungseinrichtung (45) zur Erfassung wenigstens einer vorgegebenen Drehposition der Exzenterwelle (11),
mit einer Drehpositioniereinrichtung (34), mittels derer die Exzenterwelle (11) in die Kupplungsposition überführbar ist,
wobei
die Kupplungsposition eine Einkuppelposition ist,
die Drehpositioniereinrichtung (34) von einer Steureinrichtung (52) gesteuert ist, die die Einkuppelposition vorgibt, und
die Drehsositioniereinrichtung (34) eine Regelschleite mit einem PI-Reglers aufweist, zü der der Hauptantrieb (37) und die Erfassungseinrichtung (45) gehören und die den Elektromotor des Hauptantriebs (37) gemäß der Vorgabe eines Positionswertes durch die Steureinrichtung (52) ansteuert.

2. Exzenterpresse nach Anspruch 1, **dadurch gekennzeichnet, dass** die Erfassungseinrichtung (45) ein Winkelschrittgeber ist, der der jeweiligen Drehposition der Exzenterwelle (11) entsprechende Signale abgibt.

3. Exzenterpresse nach Anspruch 2, **dadurch gekennzeichnet, dass** der Winkelschrittgeber ein inkrementaler Geber mit hoher Auflösung ist.

4. Exzenterpresse nach Anspruch 1, **dadurch gekennzeichnet, dass** der Hauptantrieb (37) einen bis zur Drehzahl Null regelbaren Elektromotor aufweist.

5. Exzenterpresse nach Anspruch 4, **dadurch gekennzeichnet, dass** der Elektromotor ein fremdbelüfteter Drehstrom-Asynchronmotor ist.

6. Exzenterpresse nach Anspruch 1, **dadurch gekennzeichnet, dass** antriebsmäßig zwischen dem Hauptantrieb (37) und der Exzenterwelle (11) eine Kupplung angeordnet ist, wobei die Steuereinrichtung (52) derart ausgelegt ist,: dass die Kupplung bei Durchführung eines Drehpositioniervorgangs eingekuppelt bleibt.

7. Exzenterpresse nach Anspruch 1, **dadurch gekennzeichnet, dass** zwischen dem Hauptantrieb (37) und der Exzenterwelle (11) ein Riementrieb (39) angeordnet ist.

8. Exzenterpresse nach Anspruch 1, **dadurch gekennzeichnet, dass** die Exzenterbüchse (21) bedarfsweise durch ein formschlüssiges Kupplungsmittel (25) mit der Exzenterwelle (11) oder einem von dieser angetriebenen Element verbindbar ist.

9. Exzenterpresse nach Anspruch 8, **dadurch gekennzeichnet, dass** das Kupplungsmittel (25) spielarm, vorzugsweise spielfrei ausgebildet ist.

10. Exzenterpresse nach Anspruch 9, **dadurch gekennzeichnet, dass** das Kupplungsmittel (25) Teil einer Klauenkupplung ist.

11. Exzenterpresse nach Anspruch 1, **dadurch gekennzeichnet, dass** die mit der Exzenterwelle (11) bedarfsweise verbindbare und von dieser trennbare Einrichtung (21) in wenigstens einer Drehposition unverdrehbar arretierbar ist.

12. Exzenterpresse nach Anspruch 11, **dadurch gekennzeichnet, dass** zur drehfesten Arretierung der Einrichtung (21) eine spielarme, vorzugsweise spielfreie Arretiereinrichtung (31, 32) vorgesehen ist.

13. Exzenterpresse nach Anspruch 12, **dadurch gekennzeichnet, dass** die Arretiereinrichtung (31, 32) ein in einer ortsfesten Lagerung (16) axial verschiebbar gelagerter Bolzen (32) ist, dem eine entsprechende Ausnehmung (31) in der Einrichtung (21, 28) zugeordnet ist.

14. Exzenterpresse nach Anspruch 1, **dadurch gekennzeichnet, dass** die Einrichtung (21) eine Verstelleinrichtung zur Hubverstellung des Exzenters (12, 14) ist.

15. Exzenterpresse nach Anspruch 13, **dadurch gekennzeichnet, dass** die Verstelleinrichtung (21) eine Exzenterbüchse ist.

16. Exzenterpresse nach Anspruch 1, **dadurch gekennzeichnet, dass** die Einrichtung eine Einrichtung (6) zum Teiletransport ist.

17. Exzenterpresse nach Anspruch 16, **dadurch gekennzeichnet, dass** die Einrichtung zum Teiletransport eine Entnahmeschaufel (7) ist bzw. aufweist.

## Claims

1. Eccentric press (1)
with a main drive (37), which has an electric motor and at least intermittently is located in drive connection with an eccentric shaft (11),
with a means (21), which determines at least one coupling position, can be connected to the eccentric shaft (11) in actuation direction and is separable from this, if required,
with a detection means (45) for the detection of at least one set rotational position of the eccentric shaft (11),
with a rotational positioning means (34), by means of which the eccentric shaft (11) can be shifted into the coupling position,
wherein
the coupling position is a coupling engagement position,
the rotational positioning means (34) is controlled by a control means (52), which sets the coupling engagement position, and
the rotational positioning means (34) has a control loop with a PI controller, which includes the main drive (37) and the detection means (45) and which actuates the electric motor of the main drive (37) in accordance with a position value being set by the control means (52).

2. Eccentric press according to Claim 1, **characterised in that** the detection means (45) is an angular encoder, which emits signals corresponding to the respective rotational position of the eccentric shaft (11).

3. Eccentric press according to Claim 2, **characterised in that** the angular encoder is a high-resolution incremental encoder.

4. Eccentric press according to Claim 1, **characterised in that** the main drive (37) has an electric motor, which is controllable to zero rotational speed.

5. Eccentric press according to Claim 4, **characterised in that** the electric motor is a force-ventilated three-phase inductor motor.

6. Eccentric press according to Claim 1, **characterised in that** a coupling is arranged for actuation between the main drive (37) and the eccentric shaft (11), wherein the control means (52) is designed so that the coupling remains engaged during the performance of a rotational positioning process.

7. Eccentric press according to Claim 1, **characterised in that** a belt drive (39) is arranged between the main drive (37) and the eccentric shaft (11).

8. Eccentric press according to Claim 1, **characterised in that** the eccentric bush (21) can be connected, where required, through a positive coupling means (25) to the eccentric shaft (11) or an element driven by this.

9. Eccentric press according to Claim 8, **characterised in that** the coupling means (25) is configured with low play, in particular to be play-free.

10. Eccentric press according to Claim 9, **characterised in that** the coupling means (25) is part of a claw coupling.

11. Eccentric press according to Claim 1, **characterised in that** the means (21), which can be connected to the eccentric shaft (11) and is separable from this, if required, can be locked against relative rotation in at least one rotational position.

12. Eccentric press according to Claim 11, **characterised in that** to lock the means (21) against rotation, a low-play, preferably play-free, locking means (31, 32) is provided.

13. Eccentric press according to Claim 12, **characterised in that** the locking means (31, 32) is a bolt (32), which is disposed in a fixed bearing (16) to be axially displaceable and which is provided with an associated corresponding recess (31) in the means (21, 28).

14. Eccentric press according to Claim 1, **characterised in that** the means (21) is an adjusting means to adjust the stroke of the eccentric (12, 14).

15. Eccentric press according to Claim 13, **characterised in that** the adjusting means (21) is an eccentric bush.

16. Eccentric press according to Claim 1, **characterised in that** the means is a means (6) for transporting parts.

17. Eccentric press according to Claim 16, **characterised in that** the means for transporting parts is or has a removal shovel.

## Revendications

1. Presse à excentrique (1) comprenant:
- un entraînement principal (37) comprenant un moteur électrique et qui est au moins par instants en liaison d'entraînement avec un arbre d'excentrique (11),
- un dispositif (21) définissant au moins une position d'accouplement, et qui peut être relié à l'arbre d'excentrique (11) dans le sens d'entraînement, et au besoin séparé de celui-ci,
- un dispositif de saisie (45) pour détecter au moins une position de rotation prédéfinie de l'arbre d'excentrique (11),
- un dispositif de positionnement de rotation (34) par l'intermédiaire duquel l'arbre d'excentrique (11) peut être amené à la position d'accouplement,
dans laquelle
- la position d'embrayage est une position d'accouplement,
- le dispositif de positionnement de rotation (34) est commandé par le dispositif de commande (54) qui prescrit la position d'accouplement,
- le dispositif de positionnement de rotation (34) présente une boucle de régulation avec un régulateur PI à laquelle appartiennent l'entraînement principal (37) et le dispositif de saisie (45) et qui commande le moteur électrique de l'entraînement principal (37) par l'unité de commande (52) selon la prescription d'une valeur de position.

2. Presse à excentrique selon la revendication 1, **caractérisée en ce que** le dispositif de saisie (45) est un indicateur de pas angulaire, qui délivre des signaux correspondants à la position de rotation de l'arbre d'excentrique (11).

3. Presse à excentrique selon la revendication 2, **caractérisée en ce que** l'indicateur de pas angulaire et un indicateur incrémentiel à haute résolution.

4. Presse à excentrique selon la revendication 1, **caractérisée en ce que** l'entraînement principal (37) comprend un moteur électrique réglable jusqu'à la vitesse de rotation nulle.

5. Presse à excentrique selon la revendication 4, **caractérisée en ce que** le moteur électrique est un moteur asynchrone triphasé à ventilation forcée.

6. Presse à excentrique selon la revendication 1, **caractérisée en ce qu'**entre l'entraînement principal (37) et l'arbre d'excentrique (11) est monté un embrayage et le dispositif de commande (52) est conçu de manière que l'embrayage reste fermé quand a lieu une opération de positionnement en rotation.

7. Presse à excentrique selon la revendication 1, **caractérisée en ce qu'**un entraînement par courroie (39) relie l'entraînement principal (37) et l'arbre d'excentrique (11).

8. Presse à excentrique selon la revendication 1, **caractérisée en ce que** la douille d'excentrique (21) peut au besoin être reliée par un moyen d'accouplement (25) à verrouillage par combinaison de formes, à l'arbre d'excentrique (11) ou à un élément entraîné par celui-ci.

9. Presse à excentrique selon la revendication 8, **caractérisée en ce que** le moyen d'accouplement (25) présente peu de jeu, il est de préférence sans jeu.

10. Presse à excentrique selon la revendication 9, **caractérisée en ce que** le moyen d'accouplement (25) est une partie d'un embrayage à crabots.

11. Presse à excentrique selon la revendication 1, **caractérisée en ce que** le dispositif (21) qui peut au besoin être relié à l'arbre d'excentrique (11) ou séparé de celui-ci, peut être arrêté sans pouvoir tourner dans au moins une position de rotation.

12. Presse à excentrique selon la revendication 11, **caractérisée en ce que** pour arrêter en rotation le dispositif (21), il est prévu un dispositif d'arrêt (31, 32) avec peu de jeu, de préférence sans jeu.

13. Presse à excentrique selon la revendication 2, **caractérisée en ce que** le dispositif d'arrêt (31, 32) comprend un tenon (32) qui peut coulisser axialement dans un palier fixe (16) et auquel est associé un évidement correspondant (31) dans le dispositif (21, 28).

14. Presse à excentrique selon la revendication 1, **caractérisée en ce que** le dispositif (21) est un dispositif de réglage de la course de l'excentrique (12, 14).

15. Presse à excentrique selon la revendication 3, **caractérisée en ce que** le dispositif de réglage (21) est une douille d'excentrique.

16. Presse à excentrique selon la revendication 1, **caractérisée en ce que** le dispositif est un dispositif (6) pour le transport de pièces.

17. Presse à excentrique selon la revendication 6, **caractérisée en ce que** le dispositif de transport de pièces est une pelle d'enlèvement (7) ou présente une telle pelle.
